# EUROPEAN PATENT SPECIFICATION

(11) **EP 3 369 597 B1**
(45) Date of publication and mention of the grant of the patent: **08.01.2020**
(21) Application number: 18159467.2
(22) Date of filing: 01.03.2018
(51) Int. Cl.: B60J 9/04, F24F 9/00

(54) **AN AIR CURTAIN, AND A VEHICLE COMPRISING AN AIR CURTAIN**
LUFTVORHANG UND FAHRZEUG MIT EINEM LUFTVORHANG
RIDEAU D'AIR ET VÉHICULE COMPRENANT UN RIDEAU D'AIR

(30) Priority: 01.03.2017 NL 2018444
(43) Date of publication of application: 05.09.2018
(73) Proprietor: H.OPDAM MANAGEMENT B.V., 1075 BW Amsterdam (NL)
(72) Inventor: OPDAM, Joannes Jozef Gerardus, 1075 BW Amsterdam (NL); OPDAM, Thomas Theodorus Jozef, 1074 VB Amsterdam (NL)
(74) Representative: Altenburg, Bernardus Stephanus Franciscus

(56) References cited:
- EP-A1- 0 362 958
- DE-A1- 19 831 787
- NL-A- 278 349
- NL-C2- 1 024 346
- US-A- 3 211 077

## Description

The present invention relates to an air curtain comprising
- a longitudinally extending air inlet section,
- a longitudinally extending air outlet section, said longitudinally extending air outlet section comprising an array of tubular channels, said array
   - having an upstream first side for air from the longitudinally extending air inlet section, and
   - a downstream second side for the discharge of air from the air curtain,
- a row of electrical fans for moving air from the longitudinally extending air inlet section to the longitudinally extending air outlet section, and
- means for guiding air from the row of electrical fans to the first side of the array, said means comprising wall members defining a flow path for air from the air inlet section to the air outlet section.

Document EP 0 362 958 A1 discloses such an air curtain.

It is well-known to use a vehicle, such as a truck or a trailer to transport freight that has to be kept cool, or even frozen. It is also possible that the cargo has to be kept at a higher temperature than the ambient temperature, e.g. above freezing point in cold climates. It is known in the art to provide such vehicles with an air curtain, which is a device for providing (typically) a downward flow of air near the access opening of a cargo space so as to reduce the ingress of ambient air when the cargo door is open. Thus a significant saving in energy can be achieved. In case of perishable freight, the air curtain may prevent perishing, avoiding significant financial loss. The downward flow of air generated by an air curtain is also called an air curtain. To avoid ambiguity, in the present application the flow of air will be written with a hyphen as air-curtain. Air is sucked into the air curtain at the air inlet section by the fans and the means comprises walls defining a flow path for said air to the air outlet section where it is expelled.

The better the air curtain works, i.e. the longer the distance over which there is a (laminar) downward flow of air towards the floor and preferably to the floor of the cargo space, the more the air-curtain helps to ensure that the cargo remains at the desired temperature and energy for cooling (or perhaps heating) is saved by reducing the ingress of ambient air. It goes without saying that the energy consumption of the air curtain should be relatively modest.

The problem with an air curtain is that to provide an even, downward flow of air an air outlet section is required that extends over a relatively long distance downwardly. If the vehicle is a relatively small vehicle compared to a truck, such as a van, the distance to the floor is less, but the bulk of the air curtain is much more of a hindrance. With a less bulky air curtain the quality of the air-curtain is reduced.

An air curtain according to the preamble is commercially available from Brightec B.V. (Amsterdam, the Netherlands). Its longitudinally extending air outlet section comprises an array of plastic tubes that help to reduce turbulence and hence achieve a relatively long air-curtain. To increase the length of the air-curtain, the means for guiding air further comprise curved baffles positioned in the flow path between the fans and the array to guide the air to the array.

A problem of the known air curtain is that the air-curtain is relatively inhomogeneous.

The object of the present invention is to provide an air curtain in which said problem is reduced.

To this end, an air curtain according to the preamble is characterized in that the upstream first side of the array of tubular channels is facing and at an angle a between 20° and 70° to the flow path of air feeding said array of tubular channels, and the air curtain comprises a plurality of longitudinally extending baffles for guiding air from the fans to the array, said baffles defining together with wall members of the air curtain wide channels for air from the fans to the first side of the array, wherein
- the fan blades rotate in a plane, with the axes of rotation being perpendicular to said plane,
- the baffles are with their leading edges at a distance - measured parallel with the axis of rotation of the fans - of less than 1/3rd of the diameter D of the fan as defined by its blades to the blades of the fan, the location of the leading edges of the baffles being chosen such that projected on the plane, wide input areas are defined that each cover a section of the effective surface areas of the fan blades,
- the baffles comprise trailing edges, wherein said trailing edges are at a distance of less than 5 cm from the first face of the array of tubular channels.

It has been found that the air curtain according to the present invention results in an improved air-curtain compared to an air curtain having curved baffles that divert the flow of air over more than 30° (typically about 90°) downward. The present invention also provides for a saving in weight and cost of baffles compared to said solution.

Arrays of tubular channels are commercially available, and typically made of plastic. They can be cut to the desired shape with oblique first side.

The array is typically an array of tubular channels that is a honeycomb array, an array of cylindrical tubes etc. The cross-section of a tubular channel of an array perpendicular to its centreline may for example be rectangular, polygonal such as square or hexagonal, or may be circular. Typically the tubular channels have a largest internal diameter of less than 1 cm.

For the angle a, 90° would be perpendicular to the flow path of the air feeding the array. The angle a is preferably between 30° and 55°.

In general the diameter D of an electrical fan as defined by its blades is larger than the width W (transverse to the longitudinal direction of the outlet opening) of the outlet opening of the air curtain, typically at least 10% and preferably at least 20% more.

The plurality of baffles comprises at least two baffles, preferably between 3 and 8.

According to a favourable embodiment, the trailing edges of the baffles define outlet surface areas of the wide channels, which outlet surface areas extend transverse to the flow direction through the wide channels,
and, for a set of wide channels defined as the largest wide channels that together provide at least 80% of the air through-put, for any pair of wide channels of said set, the ratio of the outlet surface areas is within 30% of the ratio of the corresponding pair of effective surface areas for the input areas of said pair of wide channels.

Thus a further improved homogeneous distribution can be achieved.

The deviation is preferably less than 20%, more preferably less than 10%.

If wide channels differ in through-put, the combination is made by the smallest number of wide channels necessary to exceed 80% the most.

According to a favourable embodiment, the largest distance between the trailing edges of the at least one baffle and the upstream first side of the array is at most 3 cm.

Thus the air is passed more efficiently fed to and appropriately distributed over the tubes of the array.

According to a favourable embodiment, the distance between i) the trailing edge of at least one baffle in the flow path of air from the fans, said baffle involved in defining two outlet surface areas and ii) the upstream first side of the array is at least 7 mm, preferably at least 15 mm.

This helps to reduce differences in flow speed leaving the outlet surface areas, i.e. emanating from two adjacent wide channels.

According to a favourable embodiment, there are at least 6 electrical fans per meter of the longitudinally extending air outlet section and preferably at least 8.

This allows for a homogenous air speed distribution along the length of the longitudinally extending air outlet section. In practice, the number of electrical fans will be 10 or more per m.

According to a favourable embodiment, the electrical fans have a spacing of less than 5 cm, preferably less than 3 cm between each other, and more preferably less than 1 cm.

This results in a very homogenous air-curtain extending over a long distance. It is most preferred that the electrical fans are immediately adjacent to each other.

According to a favourable embodiment, the electrical fan comprises blades, and the air curtain comprises an air passage between the electrical fan and the array, which air passage has a height H perpendicular to the flow direction of air that is smaller than the diameter D of the electrical fan as defined by its blades.

It has been found that by having a constriction after the electrical fan (or fans), the air-curtain becomes more homogeneous. The height of said air passage is preferably at most 90% of the diameter of the fan as defined by the blades, more preferably at most 80%. To avoid a significant increase in air resistance, the height of said air passage (which will encompass all flow of air from the fans to the array) is preferably at least 40% of the diameter of the fan as defined by the blades, more preferably at least 50%.

According to a favourable embodiment, the electrical fan comprises blades, and the air curtain comprises an air passage between the electrical fan and the array, wherein said air passage has a height H perpendicular to the flow direction of air that is smaller than the width W of the outlet opening of the air curtain.

It has been found that by having a constriction between the electrical fan (or fans) and the array, the air-curtain becomes more homogeneous. The height of said air passage (which will encompass all flow of air from the fans to the array) is preferably at most 90% of the width W, more preferably at most 80%. To avoid a significant increase in air resistance, the height of said air passage is preferably at least 50% of the width W, more preferably at least 60%.

Finally, the present invention relates to a vehicle comprising an air curtain, wherein the air curtain is an air curtain according to any of the claims 1 to 8.

The vehicle may be a motorised vehicle such as a van or a truck, or it may be a pulled vehicle, such as a trailer.

Typically, the centrelines of the tubular channels of the array will be perpendicular to the floor of the vehicle, but they may be at an angle of up to 70° in the midsaggital plane of the vehicle, with typically the acute angle at the side of the front of the vehicle. So, the angle will be between 89° and 70° with the wheel base (floor), the point of the angle at the floor pointing away from the front of the vehicle.

The present invention will now be illustrated with reference to the drawing where
Fig. 1 shows a schematic cut-out side view of a vehicle; and
Fig. 2 shows a cross-sectional view through an air curtain.

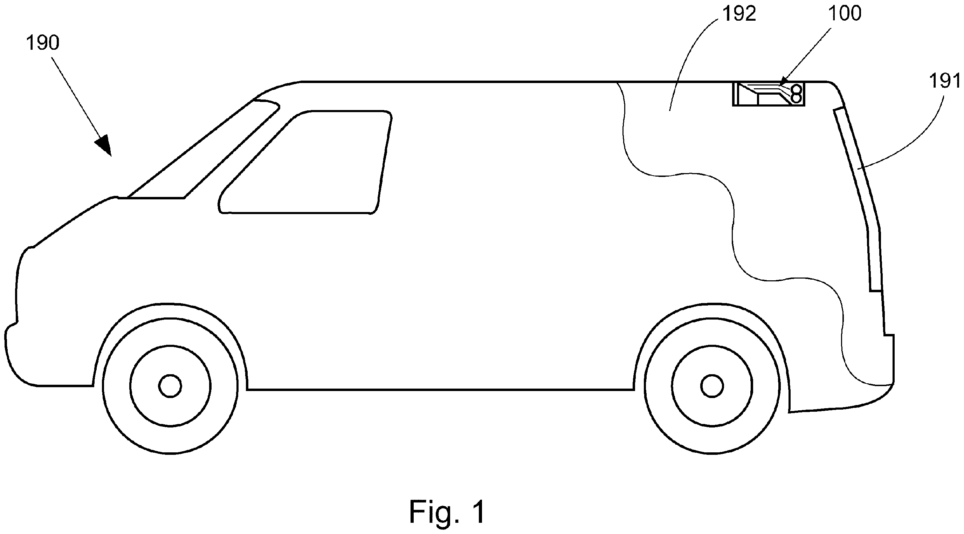

Fig. 1 shows a schematic cut-out side view of a vehicle 190, here a van 190, comprising a rear door 191 and inside cargo space 192 an air curtain 100 according to the invention, which extends over substantially the whole width of the cargo space 192.

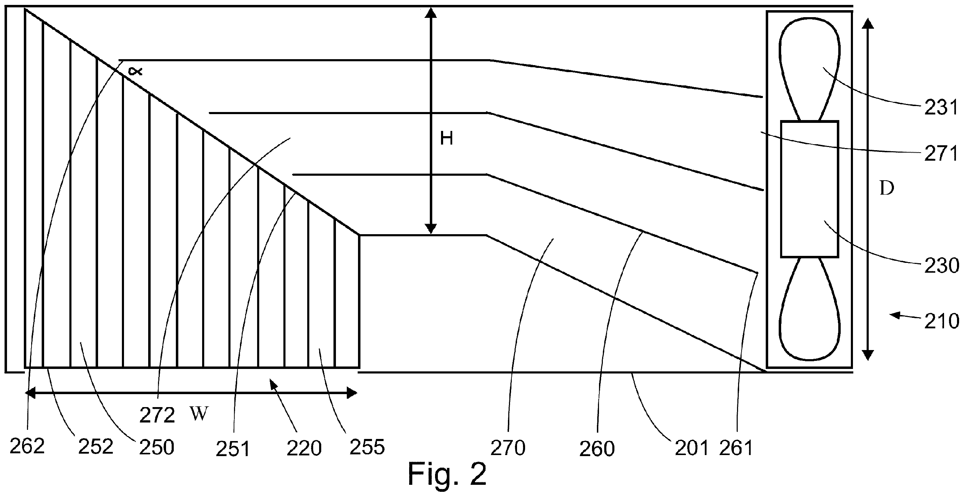

Fig. 2 shows a cross-sectional view through the air curtain 100 of the vehicle 190 of Fig. 1.

The air curtain 100 comprises a housing 201. The air curtain 100 has an air inlet section 210, and an air outlet section 220. The air outlet section 220 comprises a body 250 comprising an array of tubular channels 255. These help to reduce turbulence and thus improve a laminar air flow, i.e. an air-curtain. In this embodiment, said body 250 comprises a multitude of parallel plastic tubes, the centrelines of said tubes will be substantially transverse to the floor of the cargo space 192 of the vehicle 190.

The body 250 comprises an upstream first side 251 and a downstream second side 252 from which the air-curtain appears.

When the cargo door 191 is open, ambient air is introduced into the air curtain 100 via the air inlet section 210 facing the door opening and expelled from the air curtain 100 by a linear array of electrical fans 230, in particular those used as computer fans. Here the number is 12 fans per meter.

In the embodiment of the invention disclosed here, the body comprising tubular channels 255 is a tapered array, with the first side 251 at an angle to the direction of flow of air through the air curtain where it is feeding the array 250 (in the embodiment shown in Fig. 2 horizontal from right to left).

The fan blades rotate in a plane, with the axes of rotation being perpendicular to said plane. An air curtain 100 contains baffles 260 (separation walls positioned inside the flow of air from the fans) with their leading edge 261 at a distance - measured parallel with the axis of rotation of the fans - of less than 1/3rd of the diameter D of the fan as defined by its blades to the blades of the fan. The location of the leading edges 261 of the baffles 260, here three in the air flow and two wall members with only one side in contact with the flow of air from the fans defining the passage for air from the fans to the first array, is chosen such that projected on the plane (the projection being in a direction perpendicular to said plane), they define wide input areas that each cover a section of the effective surface areas of the fan blades 231, so not counting the central parts of the fans 230. Each input area is the inlet 271 of a wide channel 270, and is narrowed in height towards the body 250. At the trailing edges 262 of the baffles 260, the outlet surface areas 272 of the wide channels, which outlet surface areas extend transverse to the flow direction through the wide channels 270, have the same surface area ratio as the ratio of the sections of the effective surface areas for the input areas of the wide channels 270.

In the embodiment disclosed here, the smallest height H of the path for air flowing through the air curtain 100 after the electrical fans 230 is less than
- the width W of the air outlet section 220 (width W being parallel to the second side of the body and transverse to the longitudinal direction of the air curtain 100), and
- less than the diameter D of the fan as defined by the blades 231 of the electrical fans 230, which has been found to result in an improved air-curtain.

## Claims

1. An air curtain (100) comprising
- a longitudinally extending air inlet section (210),
- a longitudinally extending air outlet section (220), said longitudinally extending air outlet section (220) comprising an array (250) of tubular channels (255), said array (250)
- having an upstream first side (251) for air from the longitudinally extending air inlet section (210), and
- a downstream second side (252) for the discharge of air from the air curtain (100),
- a row of electrical fans (230) for moving air from the longitudinally extending air inlet section (210) to the longitudinally extending air outlet section (220), and
- means for guiding air from the row of electrical fans (230) to the first side (251) of the array (250), said means comprising wall members defining a flow path for air from the air inlet section (210) to the air outlet section (220);
**characterized in that** the upstream first side (251) of the array (250) of tubular channels (255) is facing and at an angle a between 20° and 70° to the flow path of air feeding said array (250) of tubular channels (255), and
the air curtain (100) comprises a plurality of longitudinally extending baffles (260) for guiding air from the fans (230) to the array (250), said baffles (260) defining together with wall members of the air curtain (100) wide channels (270) for air from the fans (230) to the first side (251) of the array (250), wherein
- the fan blades (231) rotate in a plane, with the axes of rotation being perpendicular to said plane,
- the baffles (260) are with their leading edges (261) at a distance - measured parallel with the axis of rotation of the fans (230) - of less than 1/3rd of the diameter D of the fan as defined by its blades (231) to the blades (231) of the fan, the location of the leading edges (261) of the baffles (260) being chosen such that projected on the plane, wide input areas (272) are defined that each cover a section of the effective surface areas (272) of the fan blades (231),
- the baffles (260) comprise trailing edges (262), wherein said trailing edges (262) are at a distance of less than 5 cm from the first face of the array (250) of tubular channels (255).

2. The air curtain (100) according to claim 1, wherein the trailing edges (262) of the baffles (260) define outlet surface areas (272) of the wide channels (270), which outlet surface areas (272) extend transverse to the flow direction through the wide channels (270), and, for a set of wide channels (270) defined as the largest wide channels (270) that together provide at least 80% of the air through-put, for any pair of wide channels (270) of said set, the ratio of the outlet surface areas (272) is within 30% of the ratio of the corresponding pair of effective surface areas (272) for the input areas (272) of said pair of wide channels (270).

3. The air curtain (100) according to claim 1 or 2, wherein the largest distance between the trailing edges (262) of the at least one baffle and the upstream first side (251) of the array (250) is at most 3 cm.

4. The air curtain (100) according to any of the preceding claims, wherein the distance between i) the trailing edge (261) of at least one baffle in the flow path of air from the fans (230), said baffle involved in defining two outlet surface areas (272) and ii) the upstream first side (251) of the array (250) is at least 7 mm, preferably at least 15 mm.

5. The air curtain (100) according to any of the preceding claims, wherein there are at least 6 electrical fans (230) per meter of the longitudinally extending air outlet section (220) and preferably at least 8.

6. The air curtain (100) according to any of the preceding claims, wherein the electrical fans (230) have a spacing of less than 5 cm, preferably less than 3 cm between each other, and more preferably less than 1 cm.

7. The air curtain (100) according to any of the preceding claims, wherein the electrical fan (230) comprises blades (231), and the air curtain (100) comprises an air passage between the electrical fan (230) and the array (250), which air passage has a height H perpendicular to the flow direction of air that is smaller than the diameter D of the electrical fan (230) as defined by its blades (231).

8. The air curtain (100) according to any of the preceding claims, wherein the electrical fan comprises blades (231), and the air curtain (100) comprises an air passage between the electrical fan and the array (250), wherein said air passage has a height H perpendicular to the flow direction of air that is smaller than the width W of the outlet opening of the air curtain (100).

9. A vehicle (190) comprising an air curtain (100), **characterized in that** the air curtain (100) is an air curtain (100) according to any of the claims 1 to 8.

## Patentansprüche

1. Luftvorhang (100), umfassend
- einen sich in Längsrichtung erstreckenden Lufteinlassabschnitt (210),
- einen sich in Längsrichtung erstreckenden Luftauslassabschnitt (220), wobei der sich in Längsrichtung erstreckende Luftauslassabschnitt (220) eine Anordnung (250) von rohrförmigen Kanälen (255) umfasst, wobei die Anordnung (250)
- eine stromaufwärtige erste Seite (251) für Luft aus dem sich in Längsrichtung erstreckenden Lufteinlassabschnitt (210) und
- eine stromabwärtige zweite Seite (252) zur Abgabe von Luft aus dem Luftvorhang (100) aufweist,
- eine Reihe von elektrischen Gebläsen (230) zum Bewegen von Luft von dem sich in Längsrichtung erstreckenden Lufteinlassabschnitt (210) zu dem sich in Längsrichtung erstreckenden Luftauslassabschnitt (220), und
- Mittel zum Führen von Luft von der Reihe von elektrischen Gebläsen (230) zu der ersten Seite (251) der Anordnung (250), wobei die Mittel Wandglieder umfassen, die einen Strömungspfad für Luft vom Lufteinlassabschnitt (210) zum Luftauslassabschnitt (220) definieren;
**dadurch gekennzeichnet, dass** die stromaufwärtige erste Seite (251) der Anordnung (250) von rohrförmigen Kanälen (255) dem Strömungspfad von Luft, der die Anordnung (250) von rohrförmigen Kanälen (255) speist, zugewandt ist und in einem Winkel α zwischen 20° und 70° dazu liegt, und
der Luftvorhang (100) eine Vielzahl von sich in Längsrichtung erstreckenden Leitblechen (260) zum Führen von Luft von den Gebläsen (230) zu der Anordnung (250) umfasst, wobei die Leitbleche (260) zusammen mit Wandgliedern des Luftvorhangs (100) breite Kanäle (270) für Luft von den Gebläsen (230) zur ersten Seite (251) der Anordnung (250) definieren, wobei
- sich die Gebläseblätter (231) in einer Ebene drehen, wobei die Drehachsen senkrecht zur Ebene stehen,
- die Leitbleche (260) mit ihren Vorderkanten (261) in einem Abstand - parallel zur Drehachse der Gebläse (230) gemessen - von weniger als 1/3 des Durchmessers D des Gebläses, wie er durch seine Blätter (231) definiert ist, zu den Schaufeln (231) des Gebläses sind, wobei der Ort der Vorderkanten (261) der Leitbleche (260) so gewählt ist, dass, auf die Ebene projiziert, breite Eingangsbereiche (272) definiert werden, die jeweils einen Abschnitt der effektiven Flächenbereiche (272) der Gebläseblätter (231) abdecken, wobei
- die Leitbleche (260) Hinterkanten (262) umfassen, wobei die Hinterkanten (262) in einen Abstand von weniger als 5 cm von der ersten Oberfläche der Anordnung (250) von rohrförmigen Kanälen (255) sind.

2. Luftvorhang (100) nach Anspruch 1, wobei die Hinterkanten (262) der Leitbleche (260) Auslassflächenbereiche (272) der breiten Kanäle (270) definieren, wobei sich die Auslassflächenbereiche (272) quer zur Strömungsrichtung durch die breiten Kanäle (270) erstrecken und, für einen Satz von breiten Kanälen (270), die als die größten breiten Kanäle (270) definiert sind, die zusammen mindestens 80 % des Luftdurchsatzes bereitstellen, für jedes Paar von breiten Kanälen (270) des Satzes, das Verhältnis der Auslassflächenbereiche (272) innerhalb von 30 % des Verhältnisses des entsprechenden Paars von effektiven Flächenbereichen (272) für die Eingangsbereiche (272) des Paars von breiten Kanälen (270) liegt.

3. Luftvorhang (100) nach Anspruch 1 oder 2, wobei der größte Abstand zwischen den Hinterkanten (262) des mindestens einen Leitblechs und der stromaufwärtigen ersten Seite (251) der Anordnung (250) höchstens 3 cm beträgt.

4. Luftvorhang (100) nach einem der vorstehenden Ansprüche, wobei der Abstand zwischen i) der Hinterkante (261) mindestens eines Leitblechs im Strömungspfad von Luft von den Gebläsen (230), wobei das Leitblech beim Definieren von zwei Auslassflächenbereichen (272) einbezogen ist, und ii) der stromaufwärtigen ersten Seite (251) der Anordnung (250) mindestens 7 mm, vorzugsweise mindestens 15 mm beträgt.

5. Luftvorhang (100) nach einem der vorstehenden Ansprüche, wobei mindestens 6 elektrische Gebläse (230) pro Meter des sich in Längsrichtung erstreckenden Luftauslassabschnitts (220), und vorzugsweise mindestens 8, vorhanden sind.

6. Luftvorhang (100) nach einem der vorstehenden Ansprüche, wobei die elektrischen Gebläse (230) einen Beabstandung von weniger als 5 cm, vorzugsweise weniger als 3 cm und nochmals bevorzugt weniger als 1 cm zwischen einander aufweisen.

7. Luftvorhang (100) nach einem der vorstehenden Ansprüche, wobei das elektrische Gebläse (230) Blätter (231) umfasst und der Luftvorhang (100) einen Luftdurchgang zwischen dem elektrischen Gebläse (230) und der Anordnung (250) umfasst, wobei der Luftdurchgang eine Höhe H senkrecht zur Strömungsrichtung von Luft aufweist, die kleiner ist als der Durchmesser D des elektrischen Gebläses (230), wie er durch seine Blätter (231) definiert ist.

8. Luftvorhang (100) nach einem der vorstehenden Ansprüche, wobei das elektrische Gebläse Blätter (231) umfasst und der Luftvorhang (100) einen Luftdurchgang zwischen dem elektrischen Gebläse und der Anordnung (250) umfasst, wobei der Luftdurchgang eine Höhe H senkrecht zur Strömungsrichtung von Luft aufweist, die kleiner ist als die Breite W der Auslassöffnung des Luftvorhangs (100).

9. Fahrzeug (190), das einen Luftvorhang (100) umfasst, **dadurch gekennzeichnet, dass** der Luftvorhang (100) ein Luftvorhang (100) nach einem der Ansprüche 1 bis 8 ist.

## Revendications

1. Rideau d'air (100) comprenant :
- un tronçon d'entrée pour l'air (210) s'étendant en direction longitudinale ;
- un tronçon de sortie pour l'air (220) s'étendant en direction longitudinale, ledit tronçon de sortie pour l'air (220) s'étendant en direction longitudinale comprenant un réseau (250) de canaux tubulaires (255), ledit réseau (250)
- possédant un premier côté en amont (251) pour l'air provenant du tronçon d'entrée pour l'air (210) s'étendant en direction longitudinale, et
- un second côté en aval (252) destiné à l'évacuation de l'air à partir du rideau d'air (100) ;
- une rangée de ventilateurs électriques (230) destinés à déplacer de l'air à partir du tronçon d'entrée pour l'air (210) s'étendant en direction longitudinale en direction du tronçon de sortie pour l'air (220) s'étendant en direction longitudinale ; et
- un moyen destiné au guidage de l'air à partir de la rangée de ventilateurs électriques (230) en direction du premier côté (251) du réseau (250), ledit moyen comprenant des éléments faisant office de parois définissant un chemin d'écoulement pour l'air à partir du tronçon d'entrée pour l'air (210) en direction du tronçon de sortie pour l'air (220): ;
**caractérisé en ce que** le premier côté en amont (251) du réseau (250) de canaux tubulaires (255) fait face au chemin d'écoulement de l'air alimentant ledit réseau (250) de canaux tubulaires (255) et forme un angle α entre 20° et 70° avec le chemin en question ; et
le rideau d'air (100) comprend un certain nombre de chicanes (260) s'étendant en direction longitudinale destinées au guidage de l'air à partir des ventilateurs (230) en direction du réseau (250), lesdites chicanes (260) définissant de manière conjointe avec les éléments du rideau d'air (100) faisant office de parois, de larges canaux (270) pour l'air à partir des ventilateurs (230) en direction du premier côté (251) du réseau (250) ; dans lequel
- les pales des ventilateurs (231) effectuent des rotations dans un plan, les axes de rotation étant perpendiculaires audit plan ;
- les chicanes (260) sont situées, avec leurs bords avant (261), à une distance
- mesurée en direction parallèle par rapport à l'axe de rotation des ventilateurs (230) - inférieure à 1/3 du diamètre D du ventilateur, tel que défini par ses pales (231), par rapport aux pales (231) du ventilateur, l'emplacement des bords avant (261) des chicanes (260) étant sélectionné d'une manière telle qu'à l'état projeté sur le plan, de larges zones d'entrée (272) sont définies qui couvrent respectivement une partie des superficies effectives (272) des pales de ventilateurs (231) ;
- les chicanes (260) comprennent des bords arrière (262), dans lequel lesdits bords arrière (262) sont situés à une distance inférieure à 5 cm par rapport à la première face du réseau (250) de canaux tubulaires (255).

2. Rideau d'air (100) selon la revendication 1, dans lequel les bords arrière (262) des chicanes (260) définissent des superficies de sortie (272) des larges canaux (270), lesdites superficies de sortie (272) s'étendant en direction transversale par rapport à la direction d'écoulement à travers les larges canaux (270) et, pour un jeu de larges canaux (270), définis comme étant les plus larges canaux (270) qui fournissent ensemble au moins 80 % du flux d'air, pour n'importe quelle paire de larges canaux (270) faisant partie dudit ensemble, le rapport des superficies de sortie (272) se situe en deçà de 30 % du rapport de la paire correspondante de superficies effectives (272) pour les zones d'entrée (272) de ladite paire de larges canaux (270).

3. Rideau d'air (100) selon la revendication 1 ou 2, dans lequel la plus grande distance entre les bords arrière (262) de ladite au moins une chicane et le premier côté en amont (251) du réseau (250) s'élève au maximum à 3 cm.

4. Rideau d'air (100) selon l'une quelconque des revendications précédentes, dans lequel la distance entre i) le bord arrière (261) d'au moins une chicane dans le chemin d'écoulement de l'air à partir des ventilateurs (230), ladite chicane étant impliquée dans la définition de deux superficies de sortie (272), et ii) le premier côté en amont (251) du réseau (250) s'élève à au moins 7 mm, de préférence à au moins 15 mm.

5. Rideau d'air (100) selon l'une quelconque des revendications précédentes, dans lequel on prévoit au moins six ventilateurs électriques (230) par mètre du tronçon de sortie pour l'air (220) s'étendant en direction longitudinale, et de préférence au moins huit.

6. Rideau d'air (100) selon l'une quelconque des revendications précédentes, dans lequel les ventilateurs électriques (230) possèdent un écartement inférieur à 5 cm, de préférence inférieur à 3 cm l'un par rapport à l'autre, et de manière plus préférée inférieur à 1 cm.

7. Rideau d'air (100) selon l'une quelconque des revendications précédentes, dans lequel le ventilateur électrique (230) comprend des pales (231), et le rideau d'air (100) comprend un passage pour l'air entre le ventilateur électrique (230) et le réseau (250), ledit passage pour l'air possédant une hauteur H perpendiculaire à la direction d'écoulement de l'air, qui est inférieure au diamètre D du ventilateur électrique (230), tel que défini par ses pales (231).

8. Rideau d'air (100) selon l'une quelconque des revendications précédentes, dans lequel le ventilateur électrique comprend des pales (231), et le rideau d'air (100) comprend un passage pour l'air entre le ventilateur électrique et le réseau (250), dans lequel ledit passage pour l'air possède une hauteur H perpendiculaire à la direction d'écoulement de l'air, qui est inférieure à la largeur W de l'ouverture de sortie du rideau d'air (100).

9. Véhicule (190) comprenant un rideau d'air (100), **caractérisé en ce que** le rideau d'air (100) représente un rideau d'air (100) selon l'une quelconque des revendications 1 à 8.
